# EUROPÄISCHE PATENTSCHRIFT

(11) **EP 3 749 552 B1**
(45) Veröffentlichungstag und Bekanntmachung des Hinweises auf die Patenterteilung: **03.11.2021**
(21) Anmeldenummer: 19703967.0
(22) Anmeldetag: 31.01.2019
(51) Int. Cl.: B60R 21/2334, B60R 21/237, B60R 21/233

(54) **AIRBAGMODUL UND VERFAHREN ZUR HERSTELLUNG EINES AIRBAGMODULS**
AIRBAG MODULE AND METHOD FOR PRODUCING AN AIRBAG MODULE
MODULE DE COUSSIN DE SÉCURITÉ GONFLABLE ET PROCÉDÉ POUR FABRIQUER UN MODULE DE COUSSIN DE SÉCURITÉ GONFLABLE

(30) Priorität: 08.02.2018 DE 102018102869
(43) Veröffentlichungstag der Anmeldung: 16.12.2020
(73) Patentinhaber: Dalphi Metal España, S.A., 36213 Vigo (ES)
(72) Erfinder: PEREIRA, Jaime, 36700 Tui (ES)
(74) Vertreter: ZF Patentabteilung - DIPS
(86) Internationale Anmeldenummer: PCT/EP2019/052362
(87) Internationale Veröffentlichungsnummer: WO 2019/154706

(56) Entgegenhaltungen:
- EP-A1- 1 332 928
- EP-A2- 1 391 352
- DE-A1-102005 004 183
- DE-A1-102014 015 996
- US-A- 5 979 937

## Beschreibung

Die vorliegende Erfindung betrifft ein Airbagmodul und ein Verfahren zur Herstellung eines Airbagmoduls.

Die meisten Fahrzeuge besitzen heutzutage einen Airbag, der sich im Bedarfsfall aufbläst, um einen Fahrzeuginsassen zu schützen. Der Airbag wird durch ein Gas aufgeblasen, das von einer Gaserzeugungseinheit erzeugt wird. Häufig umfasst die Gaserzeugungseinheit einen pyrotechnischen Gasgenerator, der Gas durch das Abbrennen eines Festtreibstoffs erzeugen kann. Das dabei entstehende Gas füllt einen Gassack, der zum Schutz des Insassen dient.

Die gattungsgemäße US 5,979,937 A zeigt bereits ein Airbagmodul mit den Merkmalen im Oberbegriff des Anspruchs 1, wobei der Airbag eine Frontwand sowie eine mit der Frontwand vernähte Rückwand aufweist, und wobei Abschnitte der Rückwand lösbar miteinander vernäht oder verklebt sind, um eine Entfaltungsgeschwindigkeit des Airbags zu reduzieren.

Das durch die Gaserzeugungseinheit erzeugte Gas hat meist eine hohe Temperatur, beispielsweise mehrere hundert Grad. Daher versucht man in der Regel, das erzeugte Gas im Gassack umzuleiten, sodass es einen längeren Strömungsweg zu einer oberen Außenwandung des Gassacks und dabei genug Zeit hat, sich abzukühlen. Um eine solche Umleitung zu bewirken, sind jedoch zusätzliche Komponenten notwendig, beispielsweise separate Abdeckungen, die über der Gaserzeugungseinheit angebracht werden.

Es ist daher eine Aufgabe der vorliegenden Erfindung, ein Airbagmodul bereitzustellen, das einfach und kostengünstig herzustellen ist. Insbesondere soll ein Airbagmodul mit einem Hitzeschutz bereitgestellt werden, wobei für den Hitzeschutz keine zusätzlichen Komponenten benötigt werden.

Die Aufgabe wird erfindungsgemäß gelöst durch ein Airbagmodul nach Anspruch 1.

Des Weiteren wird die Aufgabe erfindungsgemäß gelöst durch ein Verfahren nach Anspruch 6.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein erfindungsgemäßes Airbagmodul während der Montage und
- Figur 2 das Airbagmodul aus Figur 1 in einem weiter fortgeschrittenen Montagezustand.

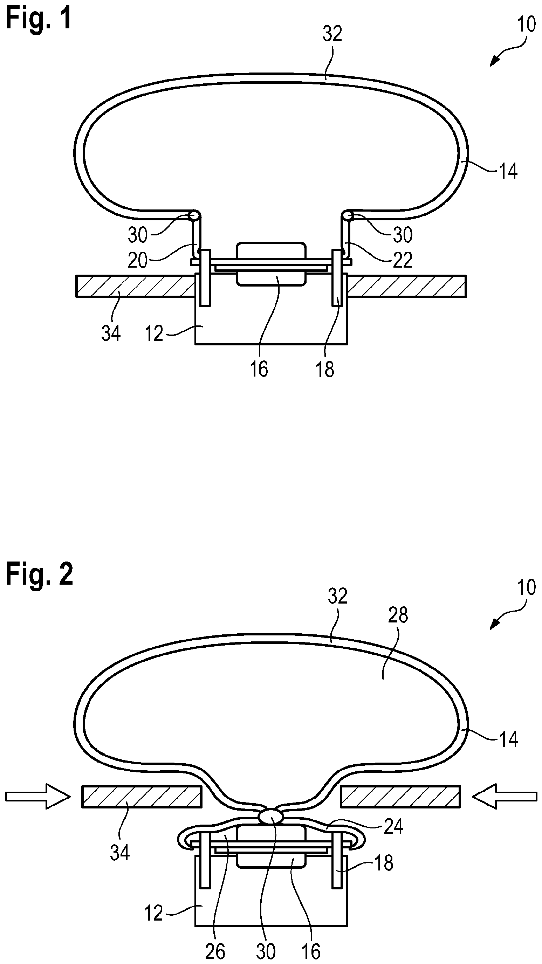

Figur 1 zeigt ein Airbagmodul 10 zum Einbau in ein Kraftfahrzeug während der Montage auf einer Montagevorrichtung 12. Das Airbagmodul 10 weist einen Gassack 14, eine Gaserzeugungseinheit 16 und eine Halterung 18 auf. Im gezeigten Fall sind der Gassack 14 und die Gaserzeugungseinheit 16 an der Halterung 18 befestigt. Es ist jedoch auch möglich, dass nur die Gaserzeugungseinheit 16 oder nur der Gassack 14 an der Halterung 18 befestigt sind, und die jeweils andere Komponente auf andere Art und Weise montiert sind.

Der Gassack 14 kann ein Gewebe aufweisen oder aus einem Gewebe bestehen.

Die Gaserzeugungseinheit 16 kann eine pyrotechnische Gaserzeugungseinheit sein und einen Feststoff und eine Zündeinheit aufweisen.

Bei der Herstellung des Airbagmoduls 10 werden, wie in Figur 1 gezeigt, gegenüberliegende Wandabschnitte 20, 22 der Außenwand des Gassacks 14 zusammengeführt. Unmittelbar über der Gaserzeugungseinheit 16 werden die Wandabschnitte 20, 22 zumindest stellenweise entlang einer Klebenaht 30 verklebt. Dafür wird ein erhitzter Klebstoff verwendet. Die Klebenaht 30 kann durchgängig oder durch einzelne Klebepunkte gebildet sein. Dabei liegt die Klebenaht 30 genau mittig über der Gaserzeugungseinheit 16.

Nach dem Auskühlen des Klebstoffes haften die Wandabschnitte 20, 22 aneinander. Durch das Verkleben entsteht eine innerste Wandlage 24, die an die Gaserzeugungseinheit 16 direkt angrenzt, wie in Figur 2 gezeigt. Insbesondere liegt die innerste Wandlage 24 faltenfrei über der Gaserzeugungseinheit 16 und umhüllt die Gaserzeugungseinheit 16. Dabei verhindert die innerste Wandlage 24, dass es zu einem direkten Kontakt zwischen der Gaserzeugungseinheit 16 und einem Außenwandabschnitt 32 des Gassacks 14 kommt, der für den Kontakt des Insassen vorgesehen ist.

Nachdem die Klebenaht 30 gebildet wurde, wird der Gassack 14 über der innersten Wandlage 24 gefaltet. Dazu wird ein verfahrbarer Falttisch 34, der Bestandteil der Montagevorrichtung 12 ist, in eine Faltposition verfahren, wie in Figur 2 dargestellt. Der Gassack 14 wird dann auf dem Falttisch 34 gefaltet.

Außerdem unterteilt die innerste Wandlage 24 den Gassack 14 in zwei Kammern 26, 28, die unterschiedlich groß ausgebildet sind, wobei die Gaserzeugungseinheit 16 mit der kleineren Kammer 26 in fluidischer Verbindung steht.

Mit dem erfindungsgemäßen Verfahren kann insbesondere eine hohe Positioniergenauigkeit der Klebenaht 30 erreicht werden. Dies hat den Vorteil, dass ein Strömungsverhalten des Gases, insbesondere ein gewünschter Strömungsweg, besonders gut reproduzierbar ist.

Beim Auslösen des Airbags strömt Gas ausgehend von der Gaserzeugungseinheit 16 in den Gassack 14. Dabei trifft das heiße Gas zunächst auf die innerste Wandlage 24, bevor es bis zur oberen Außenwandung 32 des Gassackes strömen kann. Auf diese Weise wird ermöglicht, dass sich das Gas abkühlen kann, bevor es auf die obere Außenwandung 32 trifft. Somit weist das Airbagmodul einen effektiven Hitzeschutz auf, um einen Insassen zu schützen, der durch die Außenwand selbst gebildet ist.

Beim Ausströmen des Gases aus der Gaserzeugungseinheit 16 wird folglich zuerst die kleinere Kammer 26 mit Gas gefüllt, bevor Gas in die größere Kammer 28 strömt. Somit strömt das Gas nicht direkt in die große Kammer 28 und kann sich abkühlen, bevor es auf die Außenwandung 32 trifft.

Die Klebenaht 30 ist vorzugsweise so lösbar ausgebildet, dass sie bei Eintritt des Gases zerstört wird. Beispielsweise kann die Klebenaht 30 durch die Hitze des ausströmenden Gases aufgeweicht werden, sodass sich die Wandabschnitte 20, 22 wieder voneinander lösen können. Alternativ oder zusätzlich kann die Klebenaht 30 durch einen Druck, der sich in der ersten Kammer 26 aufbaut, zerstört werden. Nun kann der komplette Gassack 14 aufgeblasen werden, sodass ein Insasse optimal geschützt ist.

Eine Klebenaht 30 als Hitzeschutz zu verwenden hat den Vorteil, dass sie besonders kostengünstig ist und keine zusätzlichen Komponenten im Airbagmodul 10 benötigt werden. Dennoch ist die Klebenaht 30 als Hitzeschutz sehr effektiv. Dadurch, dass die Klebenaht 30 lösbar ist, wird die Geometrie des Gassacks 14 in vollständig aufgeblasenem Zustand nicht beeinflusst.

## Patentansprüche

1. Airbagmodul (10), aufweisend
einen Gassack (14),
mindestens eine Gaserzeugungseinheit (16) und
eine Halterung (18), an welcher der Gassack (14) und/oder die mindestens eine Gaserzeugungseinheit (16) befestigt sind,
wobei der Gassack (14) über der Gaserzeugungseinheit (16) derart gefaltet ist, dass bei einem Auslösen der Gaserzeugungseinheit (16) der Gassack (14) aufgeblasen und entfaltet wird,
wobei eine Klebenaht (30) vorgesehen ist, durch die Wandabschnitte (20, 22) des Gassacks (14) stellenweise zusammengeklebt sind,
**dadurch gekennzeichnet, dass** die Klebenaht (30) in einem Bereich des Gassacks (14) vorgesehen ist, der direkt über der Gaserzeugungseinheit (16) liegt, um eine innerste Wandlage (24) zu bilden, die an die Gaserzeugungseinheit (16) direkt angrenzt.

2. Airbagmodul (10) nach Anspruch 1, **dadurch gekennzeichnet, dass** die innerste Wandlage (24) den Gassack (14) in zwei Kammern (26, 28) unterteilt, die unterschiedlich groß ausgebildet sind, wobei die Gaserzeugungseinheit (16) mit der kleineren Kammer (26) in fluidischer Verbindung steht.

3. Airbagmodul (10) nach einem der vorhergehenden Ansprüche, **dadurch gekennzeichnet, dass** die Klebenaht (30) genau mittig über der Gaserzeugungseinheit (16) liegt.

4. Airbagmodul (10) nach einem der vorhergehenden Ansprüche, **dadurch gekennzeichnet, dass** die Klebenaht (30) so lösbar ausgebildet ist, dass sie bei Eintritt des Gases zerstört wird.

5. Airbagmodul (10) nach einem der vorhergehenden Ansprüche, **dadurch gekennzeichnet, dass** die innerste Wandlage (24) faltenfrei über der Gaserzeugungseinheit (16) liegt.

6. Verfahren zur Herstellung eines Airbagmoduls (10) nach einem der Ansprüche 1 bis 5, welches folgende Schritte umfasst:
- Bereitstellen eines Gassacks (14), einer Gaserzeugungseinheit (16) und einer Halterung (18),
- Befestigen des Gassacks (14) und/oder der Gaserzeugungseinheit (16) an der Halterung,
- Zusammenführen von gegenüberliegenden Wandabschnitten (20, 22) des Gassacks (14) unmittelbar über der Gaserzeugungseinheit (16) und Verkleben der Wandabschnitte (20, 22) unter Bildung einer innersten Wandlage (24),
- Falten des Gassacks (14) über der innersten Wandlage (24).

7. Verfahren nach Anspruch 6, **dadurch gekennzeichnet, dass** das Airbagmodul (10) auf einer Montagevorrichtung (12) vormontiert wird, welche zumindest einen verfahrbaren Falttisch (34) aufweist, der nach dem Anbringen der Klebenaht (30) in eine Faltposition verfahren wird, wobei der Gassack (14) auf dem Falttisch (34) gefaltet wird.

## Claims

1. An airbag module (10) comprising
an airbag (14),
at least one gas generating unit (16) and
a holding fixture (18) to which the airbag (14) and/or the at least one gas generating unit (16) is/are fastened,
wherein the airbag (14) is folded above the gas generating unit (16) so that upon release of the gas generating unit (16) the airbag (14) is inflated and deployed,
wherein an adhesive joint (30) is provided by which wall portions (20, 22) of the airbag (14) are adhesively bonded at least in spots,
**characterized in that** the adhesive joint (30) is provided in an area of the airbag (14) located directly above the gas generating unit (16) so as to form an innermost wall layer (24) which is directly adjacent to the gas generating unit (16).

2. The airbag module (10) according to claim 1, **characterized in that** the innermost wall layer (24) subdivides the airbag (14) into two chambers (26, 28), which are designed to be different in size, with the gas generating unit (16) being in fluid communication with the smaller chamber (26).

3. The airbag module (10) according to any one of the preceding claims, **characterized in that** the adhesive joint (30) is located exactly centrally above the gas generating unit (16).

4. The airbag module (10) according to any one of the preceding claims, **characterized in that** the adhesive joint (30) is configured to be soluble so that it is destroyed upon entry of the gas.

5. The airbag module (10) according to any one of the preceding claims, **characterized in that** the innermost wall layer (24) is located above the gas generating unit (16) free from folds.

6. A method for manufacturing an airbag module (10) according to any one of the claims 1 to 5, comprising the following steps of:
- providing an airbag (14), a gas generating unit (16) and a holding fixture (18),
- fastening the airbag (14) and/or the gas generating unit (16) to the holding fixture,
- joining opposite wall portions (20, 22) of the airbag (14) directly above the gas generating unit (16) and adhesively bonding the wall portions (20, 22) while forming an innermost wall layer (24),
- folding the airbag (14) above the innermost wall layer (24).

7. The method according to claim 6, **characterized in that** the airbag module (10) is pre-assembled on an assembling apparatus (12) which includes at least one movable folding bench (34) which after arranging the adhesive joint (30) is moved into a folding position, wherein the airbag (14) is folded on the folding bench (34).

## Revendications

1. Module airbag (10), comprenant
un sac gonflable (14)
au moins une unité génératrice de gaz (16) et
un support (18) auquel sont fixés le coussin gonflable (14) et/ou l'au moins une unité génératrice de gaz (16),
pour lequel le sac gonflable (14) est replié sur l'unité génératrice de gaz (16) de telle sorte que, lors de la libération de l'unité génératrice de gaz (16), le sac à gonflable (14) est gonflé et déplié,
pour lequel une couture adhésive (30) est prévue, par laquelle des parties de paroi (20, 22) du sac gonflable (14) sont collées ensemble par endroits,
**caractérisé en ce que** la couture adhésive (30) est prévue dans une région du sac gonflable (14), qui recouvre directement l'unité génératrice de gaz (16) pour former une couche de paroi la plus interne (24), qui est directement adjacente à l'unité génératrice de gaz (16).

2. Module airbag (10) selon la revendication 1, **caractérisé en ce que** la couche de paroi la plus interne (24) divise le coussin gonflable (14) en deux chambres (26, 28), qui sont conçues de tailles différentes, pour lequel l'unité de génération de gaz (16) est en communication fluidique avec la plus petite chambre (26).

3. Module airbag (10) selon l'une des revendications précédentes, **caractérisé en ce que** la couture adhésive (30) se trouve exactement au centre au-dessus de l'unité génératrice de gaz (16).

4. Module airbag (10) selon l'une des revendications précédentes, **caractérisé en ce que** la couture adhésive (30) est conçue pour être détachable de telle sorte qu'elle est détruite lors de l'entrée du gaz.

5. Module airbag (10) selon l'une des revendications précédentes, **caractérisé en ce que** la couche de paroi la plus interne (24) repose sans plis sur l'unité génératrice de gaz (16).

6. Procédé de fabrication d'un module airbag (10) selon l'une quelconque des revendications 1 à 5, comprenant les étapes suivantes :
- tenir prêts un sac à gonflable (14), une unité génératrice de gaz (16) et un support (18),
- fixer le sac gonflable (14) et/ou l'unité de génération de gaz (16) au support,
- rapprocher des parties de paroi opposées (20, 22) du sac gonflable (14) immédiatement au-dessus de l'unité génératrice de gaz (16) et coller les parties de paroi (20, 22) ensemble pour former une couche de paroi la plus interne (24),
- plier le sac gonflable (14) sur la couche de paroi la plus interne (24).

7. Procédé selon la revendication 6, **caractérisé en ce que** le module airbag (10) est prémonté sur un dispositif de montage (12), lequel présente au moins une table de pliage mobile (34) qui est déplacée dans une position de pliage après l'application de la couture adhésive (30), pour lequel le coussin gonflable (14) est plié sur la table de pliage (34).
